(19) Europäisches Patentamt
European Patent Office
Office européen des brevets

(11) Veröffentlichungsnummer: **0 588 020 A1**

(12) **EUROPÄISCHE PATENTANMELDUNG**

(21) Anmeldenummer: **93111628.9**

(22) Anmeldetag: **21.07.93**

(51) Int. Cl.[5]: **A01N 43/82**, C09D 5/14, B27K 3/34, B27K 3/50, C08K 5/46, D06M 13/352, //(A01N43/82,55:04,43:82,33:12)

(30) Priorität: **16.09.92 DE 4230956**

(43) Veröffentlichungstag der Anmeldung: **23.03.94 Patentblatt 94/12**

(84) Benannte Vertragsstaaten: **BE DE DK FR GB NL SE**

(71) Anmelder: **Witco GmbH**
**Ernst-Schering-Strasse 14,**
**Postfach 1620**
**D-59180 Bergkamen(DE)**

(72) Erfinder: **Landsiedel, Horst**
**Massener Strasse 61**
**D-59423 Unna(DE)**
Erfinder: **Ventur, Dirk, Dr.Dipl.-Chem.**
**Auf dem Backenberg 15**
**D-44801 Bochum(DE)**

(54) **Verwendung von Thiadiazolen als Biozide für den Materialschutz.**

(57) Die vorliegende Erfindung betrifft die Verwendung von Thiadiazolen des Typs

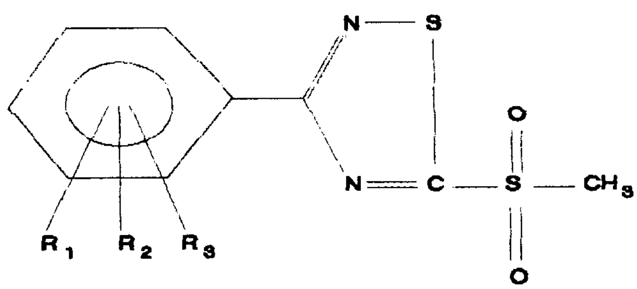

Formel I

mit

$R_1$, $R_2$, $R_3$ =
- Wasserstoff
- Alkylgruppen mit 1 - 4 Kohlenstoffatomen
- substituierte Alkylgruppen mit 1 - 4 Kohlenstoffatomen, die mit Halogen, einer Alkoxy-, Carboxy-, Hydroxy- oder Nitrogruppe substituiert sind
- CN, Halogen, $NO_2$
- COOR mit R = H, Alkylgruppen mit 1 - 4 Kohlenstoffatomen

und die Verwendung von synergistisch wirkenden Kombinationen von Thiadiazolen mit anderen biozid wirkenden Substanzen als Biozide für den Materialschutz.

Die erfindungsgemäßen Verbindungen, die sich durch ein breites, biozides Wirkungsspektrum auszeichnen, lassen sich insbesondere für den Holzschutz zur Verhinderung der Holzzerstörung durch Pilze oder Bakterien, zur bioziden Ausrüstung von Kunststoffen und als Konservierungsmittel bzw. Desinfektionsmittel einsetzen.

Die empfohlenen Einsatzkonzentrationen sind 0.01 bis 15 Gewichtsprozent - vorzugsweise 0.1 - 3.0



Rank Xerox (UK) Business Services
(3.10/3.09/3.3.4)

Gewichtsprozent.

Die Erfindung betrifft Thiadiazol-Verbindungen und Kombinationen von Thiadiazol-Verbindungen mit anderen Co-Bioziden, welche infolge ihrer bakteriziden und fungiziden Eigenschaften und speziell bei den Kombinationsprodukten aufgrund von synergistischen bioziden Effekten als Desinfektionsmittel, Holzschutzmittel, Konservierungsmittel und zur bakteriziden und fungiziden Ausrüstung von Farben, Textilien, Kunststoffen, Baustoffen geeignet sind.

Die Herstellung neuer Diazol-Verbindungen und deren Verwendung in pestiziden Präparaten und zur Bekämpfung von Nematoden und pflanzenschädigenden Fungi ist in DE-A-2 142 913 beschrieben.

Es wurde nun überraschend gefunden, daß Thiadiazol-Verbindungen der allgemeinen Formel I

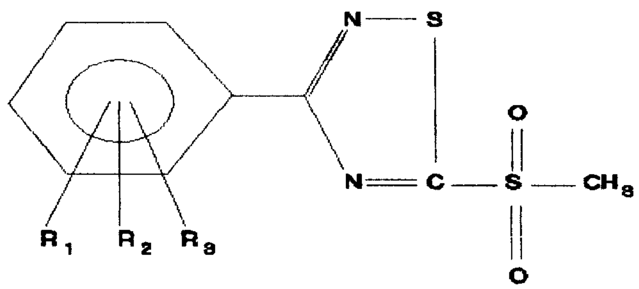

Formel I

mit

$R_1$, $R_2$, $R_3$ =
- Wasserstoff
- Alkylgruppen mit 1 - 3 Kohlenstoffatomen
- substituierte Alkylgruppen mit 1 - 4 Kohlenstoffatomen, die mit Halogen, einer Alkoxy-, Carboxy-, Hydroxy- oder Nitrogruppe substituiert sind
- CN, Halogen, $NO_2$
- COOR mit R = H, Alkylgruppen mit 1 - 4 Kohlenstoffatomen

und insbesondere die synergistisch wirkenden Kombinationen der erfindungsgemäß verwendeten Thiadiazol-Verbindungen mit anderen Co-Bioziden, wie z.B. Tributylzinnverbindungen, quaternäre Ammoniumverbindungen, Triazole etc., eine sehr gute Wirkung gegen holzzerstörende bzw. holzverfärbende Pilze, Bakterien, Algen, Moderfäule und Schimmelpilze aufweisen.

Die Erfindung betrifft demnach die Verwendung von Thiadiazol-Verbindungen der allgemeinen Formel I als Wirkstoff in Desinfektionsmitteln, Holzschutzmitteln, Konservierungsmitteln und zur bakteriziden und fungiziden Ausrüstung von Farben, Textilien, Kunststoffen und Baustoffen.

Gegenstand der Erfindung sind weiterhin Holzschutzmittel, die dadurch gekennzeichnet sind, daß sie neben flüssigen oder festen Trägerstoffen Thiadiazol-Verbindungen gemäß Anspruch I, insbesondere 5-Methylsulfonyl-3-phenyl-1,2,4-thiadiazol, als Wirkstoff enthalten.

Ein weiterer Gegenstand der Erfindung ist die Verwendung von Thiadiazol-Verbindungen der allgemeinen Formel I in Kombination mit Co-Bioziden im Gewichtsverhältnis 1 : 10 bis 10 : 1.

Ein weiterer Gegenstand der Erfindung sind Holzschutzmittel, dadurch gekennzeichnet, daß sie neben flüssigen oder festen Trägerstoffen Thiadiazol-Verbindungen gemäß Formel I in Kombinatin mit Co-Bioziden als Wirkstoffe enthalten.

Besonders vorteilhaft sind dabei Holzschutzmittel, die Thiadiazol-Verbindungen in synergistischer Kombination mit Tributylzinn-Verbindungen, quartären Ammonium-Verbindungen oder Triazolen enthalten.

Die erfindungsgemäßen Mittel lassen sich für den Holzschutz einsetzen, da hierdurch neben der Verhinderung des Abbaus durch holzzerstörende Pilze auch ein Schutz gegen holzfärbende Pilze und Bakterienbefall erreicht wird. Bakterien bewirken keinen Abbau des Holzes, können aber einen Angriff durch Pilze begünstigen oder aber zu Verfärbungen auf der Holzoberfläche führen.

Die Mittel werden in Form von Lösungen, gegebenenfalls mit Farb- und Hilfsstoffen, in das Holz durch Streichen, Spritzen, Sprühen oder Tauchen eingebracht.

Des weiteren lassen sich die erfindungsgemäßen Mittel für die biozide Ausrüstung von Textilien, Kunststoffen und Baustoffen einsetzen, wobei sie zweckmäßig in Form von Zubereitungen, wie Lösungen, Emulsionen, Dispersionen mit und ohne Bindemittel, oder mit festen Trägerstoffen bzw. Verdünnungsmitteln und gegebenenfalls mit Zusatz von Netz-, Haft-, Emulgier- und Dispergierhilfsmitteln angewandt werden.

Die Wirkstoffkonzentrationen liegen im allgemeinen im Bereich von 0.05 bis 50 Gew.-% und werden durch die Anforderungen der Anwendung und die Aufnahmefähigkeit der Substrate bestimmt.

Für den Holzschutz werden bevorzugt Lösungen der erfindungsgemäßen Mittel in Benzinfraktionen, aliphatischen oder aromatischen Lösungsmitteln wie Hexan, Toluol oder Xylol, gegebenenfalls mit Zusatz

von Penetrationsfördermitteln, Bindemitteln oder anderen Lösungsmitteln, in Konzentrationen von 0.05 bis 5 Gew.-% verwendet und in Mengen von 50 bis 400 g Wirkstofflösung je $m^2$ Holzoberfläche durch Streichen, Spritzen und dergleichen aufgebracht.

Ein sehr wirkungsvoller Holzschutz wird erreicht, wenn die erfindungsgemäßen Mittel, gelöst in geeigneten Substanzen, durch spezielle technische Verfahren, z. B. Doppelvakuumverfahren, Vakuumverfahren oder Vakuumdruckverfahren, in das Holz eingebracht werden, so daß eine Beladung von 0.1 bis 3.0 - vorzugsweise 0.3 bis 1.5 kg - Wirkstoff je $m^3$ Holz erreicht wird.

Zum Schutz von Holzwerkstoffen können die erfindungsgemäßen Mittel - in Form von hochkonzentrierten Lösungen bzw. Formulierungen mit Emulgatoren - dem Bindemittel oder Klebstoff in Mengen von 0.1 bis 2 Gew.-%, bezogen auf Wirkstoff, zugesetzt werden.

Zum Schutz von Textilien, z. B. Baumwollgeweben, gegen Befall durch Mikroorganismen lassen sich die Mittel aus Lösungen, z. B. in Ethanol, Xylol, Ketonen, mit Wirkstoffkonzentrationen von 0.05 bis 3 Gew.-% mittels Sprühen oder Tränken aufbringen, wobei gegebenenfalls Hydrophobierungsmittel zugesetzt werden können.

Eine deutliche Verbreiterung des Wirkstoffspektrums der Thiadiazol-Verbindungen ist durch die Kombination dieser Verbindungen mit anderen Bioziden möglich. In vielen Fällen werden hierbei synergistische Effekte beobachtet. Geeignete Co-Biozide sind z.B.:

3-Jod-2-propynyl-butyl-carbamat
Isothiazolone
Kupfer-8-oxychinolin
Kupfernaphthenat
N,N-Dimethyl-N'-phenyl-N'(fluordichlormethylthio)sulfamid
N-Cyclohexyl-N-methoxy-2,5-dimethyl-furan-3-carbonsäureamid
N-Propyl-N-2-(2,4,6-trichlorphenoxy)ethyl-1H-imidazolcarboxamid
N-Trichlormethylthio-phthalimid
α-[2-(4-Chlorophenyl)ethyl]-α-(1,1-dimethyl)-1H-1,2,4-triazol-1-ethanol
1-[2-(2,4-dichlorphenyl)-1,3-dioxolan-2-yl]methyl-1H-1,2,4-triazol
quaternäre Ammoniumverbindungen
Tributylzinnverbindungen

Auch zur insektiziden Ausrüstung lassen sich die erfindungsgemäßen Mittel mit entsprechendem Insektiziden, wie z.B. Permethrin, kombinieren.

Herstellungsbeispiel:

Synthese von 5-Methylsulfonyl-3-phenyl-1,2,4-thiadiazol

75 g Benzamidiniumchlorid, 257 g Natriummethylat (30 % in Methanol), 92 g Kohlenstoffdisulfid, 19 g Schwefel und 450 g Methanol werden 6 Stunden am Rückfluß gekocht. Der Überschuß an Schwefelkohlenstoff wird über eine Destillationsbrücke abdestilliert und das Methanol am Rotationsverdampfer abgezogen. Der Rückstand wird in heißem Wasser gelöst und abfiltriert. Das Filtrat mit Salzsäure auf pH 3 angesäuert, das ausgefallene Produkt abfiltriert, in Kaliumcarbonat-Lösung aufgenommen, filtriert und erneut mit Salzsäure ausgefällt.

52 g der Thiadiazol-Verbindung 5-Thio-3-phenyl-1,2,4-thiadiazol, 18.5 g Kaliumcarbonat, 54 g Methyliodid und 270 ml Aceton werden 3 Stunden am Rückfluß gekocht, in 1.5 l Wasser eingerührt und anschließend der weiße Niederschlag abfiltriert. Der Niederschlag wird aus Ethylether umkristallisiert.

20 g 5-Methylthio-3-phenyl-1,2,4-thiadiazol werden in 250 ml Essigsäure gelöst und mit 50 ml 30 % Wasserstoffperoxid-Lösung versetzt. Nach 72 Stunden wird der Niederschlag von 5-Methylsulfonyl-3-phenyl-1,2,4-thiadiazol abfiltriert und mit Wasser und Hexan gewaschen.

**Überprüfung der bioziden Wirkung**

Zum Wirkungsnachweis wurden mit den in Tabelle 1 näher bezeichneten acetonischen Lösungen Papierrundfilter (ϕ 2.0 cm für Bakterien; ϕ 5.5 cm für Pilze) getränkt, an der Luft getrocknet und danach in Petrischalen auf Agar, der mit Bakteriensuspension bzw. Pilzsporensuspension beimpft war, gelegt und 2 Tage bei + 37 °C (Bakterien) bzw. 3 Wochen bei + 30 °C (Pilze) bebrütet. Danach wurden die Hemmzonen (Breite der bewuchsfreien Zone in mm) um die Proben bestimmt.

Des weiteren wurde bei Abmischungen der erfindungsgemäßen Thiadiazole mit einer Reihe von anderen - für den Materialschutz eingesetzten - Bioziden eine deutliche synergistische Wirkung festgestellt

(s. Ergebnisse in den Tabellen 2 und 3).

**Tabelle 1**

**Agar-Auflegetest, Hemmzonen um die Proben in mm**

| | 5-Methylsulfonyl-3-phenyl-1,2,4-thiadiazol Tränklösung in Aceton (Gew.-%) 1.6 | 0.8 | 0.4 | 0.2 | 0-Probe |
|---|---|---|---|---|---|
| **Bakterien** | | | | | |
| Bac. subt. | 20 | 19 | 19 | 15 | 0 |
| Staph. aur. | 22 | 22 | 22 | 20 | 0 |
| Prot. vulg. | 25 | 24 | 24 | 19 | 0 |
| **Hefe** | | | | | |
| Cand. alb. | 16 | 16 | 16 | 14 | 0 |
| **Pilze** | | | | | |
| Asp. niger | 6-8 | 4-5 | 1-2 | 0-1 | 0+++ |
| Trich. vir. | 0-1 | 0 | 0 | 0 | 0+++ |
| Pen. fun. | v.o.B. | v.o.B. | v.o.B. | 12-15 | 0+++ |
| Peac. var. | v.o.B. | v.o.B. | v.o.B. | 10-12 | 0+++ |
| Chaet. glob. | 12-15 | 12-15 | 12-15 | 10-12 | 0+++ |
| Clad. herb. | v.o.B. | v.o.B. | v.o.B. | 12-15 | 0+++ |
| Aureob. pull | v.o.B. | v.o.B. | > 15 | 10-12 | 0+++ |

v.o.B. = völlig ohne Bewuchs
0+++ = Probe völlig bewachsen

| | |
|---|---|
| Bac. subt. | = Bacillus subtilis |
| Staph. aur. | = Staphylococcus aureus |
| Prot. vulg. | = Proteus vulgaris |
| | |
| Cand. alb. | = Candida albicans |
| | |
| Asp. niger | = Aspergillus niger |
| Trich. vir. | = Trichoderma viride |
| Pen. fun. | = Penicillium funicolosum |
| Peac. var. | = Paecilomyces varioti |
| Chaet. glob. | = Chaetomium globosum |
| Clad. herb. | = Cladosporium herbarum |
| Aureob. pull | = Aureobasidium pullulans |

Tabelle 2a

Agar-Auflegetest, Hemmzonen um die Proben in mm

| Tränklösung Biozid | Gew.% | Pilze: Aspergillus niger | Trichoderma viride | Penicillium funicolosum | Paecilomyces varioti |
|---|---|---|---|---|---|
| MPT* | 0.50 | 5-6 | 0-1 | › 15 | v.o.B. |
| MPT | 0.25 | 4-5 | 0 | › 15 | › 15 |
| A* | 2.0 | 3-4 | 0+ | 0-1 | 1-2 |
| A | 1.0 | 2-3 | 0++ | 0 | 0-1 |
| MPT:A | 0.25 :1.0 | 12-15 | 3-4 | v.o.B. | 12-15 |
| MPT:A | 0.125:0.5 | 10-12 | 2-3 | v.o.B. | 10-12 |
| B* | 1.0 | v.o.B. | 0++ | 0++ | 1-2 |
| B | 0.50 | v.o.B. | 0+++ | 0+++ | 0 |
| MPT:B | 0.25 :0.5 | v.o.B. | 1-2 | v.o.B. | 6-8 |
| MPT:B | 0.125:0.25 | 12-15 | 0-1 | 10-12 | 1-2 |
| C* | 1.0 | v.o.B. | 12-15 | v.o.B. | 0 |
| C | 0.50 | v.o.B. | 10-12 | v.o.B. | 0+ |
| MPT:C | 0.25 :0.5 | v.o.B. | 10-12 | v.o.B. | 10-12 |
| MPT:C | 0.125:0.25 | › 15 | 3-4 | › 15 | 8-10 |
| D* | 1.0 | 3-4 | 2-3 | 12-15 | 6-8 |
| D | 0.50 | 0-1 | 0-1 | 6-8 | 4-5 |
| MPT:D | 0.25:0.5 | 6-8 | 3-4 | v.o.B. | 10-12 |
| MPT:D | 0.125:0.25 | 3-4 | 1-2 | 10-12 | 6-8 |
| 0-Proben (ohne Biozid) | | 0+++ | 0+++ | 0+++ | 0+++ |

**Tabelle 2b**

**Agar-Auflegetest, Hemmzonen um die Proben in mm**

| Pilze | | | | |
|---|---|---|---|---|
| **Tränklösung Biozid** | **Gew.%** | **Chaetomium globosum** | **Cladosporium herbarum** | **Aureobasidium pullulans** |
| MPT* | 0.50 | 12-15 | 12-15 | v.o.B |
| MPT | 0.25 | 10-12 | 10-12 | v.o.B |
| A* | 2.0 | 2-3 | 2-3 | 3-4 |
| A | 1.0 | 1-2 | 1-2 | 2-3 |
| MPT:A | 0.25 :1.0 | v.o.B. | 10-12 | v.o.B |
| MPT:A | 0.125:0.5 | > 15 | 6-8 | v.o.B. |
| B* | 1.0 | > 15 | 0+ | 3-4 |
| B | 0.50 | > 15 | 0++ | 0 |
| MPT:B | 0.25 :0.5 | > 15 | 8-10 | v.o.B. |
| MPT:B | 0.125:0.25 | 12-15 | 2-3 | v.o.B. |
| C* | 1.0 | v.o.B. | 0+ | v.o.B. |
| C | 0.50 | v.o.B. | 0++ | v.o.B. |
| MPT:C | 0.25 :0.5 | v.o.B. | 4-5 | v.o.B. |
| MPT:C | 0.125:0.25 | v.o.B. | 1-2 | v.o.B. |
| D* | 1.0 | 12-15 | 10-12 | 6-8 |
| D | 0.50 | 3-4 | 8-10 | 3-4 |
| MPT:D | 0.25:0.5 | 12-15 | 12-15 | > 15 |
| MPT:D | 0.125:0.25 | 6-8 | 6-8 | 5-6 |
| 0-Proben (ohne Biozid) | | 0+++ | 0+++ | 0+++ |

MPT* = 5-Methylsulfonyl-3-phenyl-1,2,4-thiadiazol
A* = Tri-n-butylzinnaphthenat
B* = 1-[2-(2,4-dichlorphenyl)-1,3-dioxolan-2-yl]-methyl-1H-1,2,4-triazol
C* = α-[2-(4-Chlorphenyl)ethyl]- α -(1,1-dimethyl)-1H-1,2,4-triazol-1-ethanol
D* = Alkyldimethylbenzylammoniumchlorid

---

v.o.B.= völlig ohne Bewuchs
0+ = keine Hemmzone, schwacher Bewuchs der Probe
0++ = keine Hemmzone, mittlerer Bewuchs der Probe
0+++ = keine Hemmzone, starker Bewuchs der Probe

Tabelle 3

Agar-Auflegetest, Hemmzonen um die Proben in mm

| Tränklösung Biozid | Gew.-% | Bakterien Bac. subt. | Bakterien Staph. aur. | Hefe Cand. alb. |
|---|---|---|---|---|
| MPT* | 0.5 | 22 | 19 | 20 |
| MPT | 0,25 | 21 | 18 | 18 |
| A* | 2,0 | 7 | 14 | 16 |
| A | 1,0 | 6 | 12 | 16 |
| MPT:A | 0,25 : 1,0 | 21 | 22 | 21 |
| MPT:A | 0,125: 0,5 | 20 | 20 | 20 |
| B* | 1,0 | 0 | 0 | 18 |
| B | 0,5 | 0 | 0 | 17 |
| MPT:B | 0,25 : 0,5 | 19 | 20 | 20 |
| MPT:B | 0,125: 0,2 | 18 | 18 | 20 |
| C* | 1,0 | 9 | 10 | 20 |
| C | 0,5 | 8 | 7 | 18 |
| MPT:C | 0,25 : 0,5 | 21 | 18 | 30 |
| MPT:C | 0,125: 0,25 | 19 | 16 | 25 |
| D* | 1,0 | 18 | 20 | 20 |
| D | 0,5 | 16 | 19 | 14 |
| MPT:D | 0,25 : 0,5 | 24 | 22 | 21 |
| MPT:D | 0,125: 0,25 | 23 | 21 | 18 |
| 0-Proben (ohne Biozid) | | 0 | 0 | 0 |

| | | |
|---|---|---|
| MPT* | = | 5-Methylsulfonyl-3-phenyl-1,2,4-thiadiazol |
| A* | = | Tri-n-butylzinnaphthenat |
| B* | = | 1-[2-(2,4-dichlorphenyl)-1,3-dioxolan-2-yl]-methyl-1H-1,2,4,-triazol |
| C* | = | α[2-(4-Chlorphenyl)ethyl]-α-(1,1-dimethyl)-1H-1,2,4,-triazol-1-ethanol |
| D* | = | Alkyldimethylbenzylammoniumchlorid |

## Anwendungsbeipiele

### Beispiel 1

Eine farblose, wenig Bindemittel enthaltende Formulierung, bestehend aus
1 Gew.-Tl. 5-Methylsulfonyl-3-phenyl-1,2,4-thiadiazol
0.1 Gew.-Tl. Permethrin
6 Gew.-Tl. Diethylenglykolmonobutylether
10 Gew.-Tl. langöliges Alkydharz (60 %ig)
82.9 Gew.-Tl. hochsiedendes Testbenzin (Kristallöl 60)
zeigt ein gutes Eindringvermögen und läßt sich sehr gut als Holzschutzgrundierung für Bauholz verwenden.

### Beipiel 2

Eine farbige Holzschutz-Lasur, bestehend aus
1.2 Gew.-Tl. 5-Methylsulfonyl-3-phenyl-1,2,4-thiadiazol
40.0 Gew.-Tl. langöliges Alkydharz (50 %ig)
0.5 Gew.-Tl. Sikkative
0.5 Gew.-Tl. Antiabsetzmittel
9.2 Gew.-Tl. Eisenoxidrotpaste
0.8 Gew.-Tl. Eisenoxidschwarzpaste
8 Gew.-Tl. Diethylenglykolmonobutylether
39.8 Gew.-Tl. hochsiedendes Testbenzin (Kristallöl 60)
ist geeignet zum Anstrich von maßhaltigen Holzbauteilen, wie Fensterrahmen, Türen, usw.

### Beispiel 3

Eine Wirkstofflösung zur bioziden Ausrüstung von Textilien, z. B. Baumwollsegeltuch, bestehend aus
2.0 Gew.-T1. 5-Methylsulfonyl-3-phenyl-1,2,4-thiadiazol
4.4 Gew.-Tl. mikronisiertes Polyethylenwachs
93.6 Gew.-Tl. geruchsarmes, synthetisches Isoparaffin
läßt sich durch Sprühen der Lösung oder durch Tauchen bzw. Tränken applizieren.

### Beispiel 4

Ein Wirkstoffkonzentrat bestehend aus
25 Gew.-Tl. 5-Methylsulfonyl-3-phenyl-1,2,4-thiadiazol
35 Gew.-Tl. Xylol
40 Gew.-Tl. nichtionogenen Emulgator
läßt sich in Konzentration von 0.2 bis 4 Gew.-Tl. zur Topfkonservierung bzw. zur bioziden Ausrüstung von wäßrigen Anstrichsystemen, z. B. Dispersionen auf Acrylat-Basis, einsetzen.

Beispiel 5

Zum Wirkungsnachweis der erfindungsgemäßen Mittel in Anstrichen wurde eine handelsübliche Kunststoffdispersionsfarbe (auf Basis Acrylsäureester-Copolymerisat) mit abgestuften Konzentrationen der in Beispiel 4 beschriebenen Formulierung homogen vermischt, gleichmäßig auf PVC-Platten (1 mm dick, Durchmesser 5 cm) aufgetragen und nach dem Antrocknen in Petrischalen auf Biomalzagar gelegt. Proben und Agar wurden mit einer Pilzsporensuspension, die Sporen von in Anstrichen vorkommenden Pilzen wie Cladosporum herbarum, Aureobasidium pullulans, Trichoderma viride, Penicillium funicolosum, Aspergillus niger und Sclerophoma pithyophila besprüht.

Die Petrischalen wurden bei Raumtemperatur gelagert und die Pilzentwicklung auf den Anstrichen nach 3 und 6 Wochen beurteilt.

Als Vergleich wurden Proben mit Anstrichen ohne Wirkstoff sowie mit einem handelsüblichen Produkt (Dithiocarbaminat-Zubereitung) mitgeprüft. Die Ergebnisse in Tabelle 3 zeigen die gute Wirksamkeit der erfindungsgemäßen Thiadiazol-Verbindungen.

**Tabelle 4**

| Zugesetzter Wirkstoff (Gew.- %) | Pilzentwicklung auf Dispersionsfarbanstrichen nach 3 Wochen | 6 Wochen |
|---|---|---|
| Formulierung Beispiel 4 | | |
| 1,0 (= 0.25% Wirkstoff) | 1 | 2 |
| 2,0 (= 0,50% Wirkstoff) | 0 | 0 |
| 3,0 (= 0,75% Wirkstoff) | 0 | 0 |
| Handelsübliches Produkt | | |
| 2,0 | 2 | 4 |
| 4,0 | 2 | 3 |
| 6,0 | 1 | 2 |
| 0-Proben (ohne Wirkstoff) | 4 | 6 |

0 = Anstrich völlig frei von Pilzbewuchs
6 = Anstrich völlig mit Pilzen bewachsen

Beispiel 6

Die Wirkung der erfindungsgemäßen Thiadiazol-Verbindung gegen holzzerstörende Pilze wurde mittels eines modifizierten 'mini-wood-block-test' geprüft:

Holzklötzchen aus Kiefernsplintholz mit den Maßen 30 x 10 x 5 mm wurden mit abgestuften Konzentrationen von 5-Methylsulfonyl-3-phenyl-1,2,4-thiadiazol in Aceton unter Vakuum getränkt, an der Luft getrocknet, sterilisiert und 6 Wochen dem Angriff von Gloeophyllum trabeum in Erde ausgesetzt. Danach wurden die Klötzchen getrocknet und die einzelnen Gewichtsverluste bestimmt. Zur Kontrolle wurden Holzklötzchen ohne Wirkstoff mitgeprüft (in Anlehnung an die in Dokument No: IRG/WP/2317 beschriebene Methode).

Durch die so ermittelten Gewichtsverluste bei unterschiedlicher Wirkstoffbeladung des Holzes lassen sich die toxischen Grenzwerte gegen Basidiomyceten bestimmen.

Nach den in Tabelle 5 aufgelisteten Ergebnissen weist 5-Methylsulfonyl-3-phenyl-1,2,4-thiadiazol gegenüber Gloeophyllum trabeum einen toxischen Grenzwert von ca. 0,3-0,5 kg/$m^3$ Holz auf.

Tabelle 5

| **Wirksamkeitstest ( Prüfpilz: Gloeophyllum trabeum )** | |
|---|---|
| Beladung des Holzes mit 5-Methylsulfonyl-3-phenyl-1,2,4-thiadiazol (in kg/$m^3$ Holz) | Prozentualer Gewichtsverlust (Durchschnittswerte von jeweils 3 Proben) |
| 0 | 33,4 |
| 0,143 | 30,1 |
| 0,202 | 11,8 |
| 0,291 | 3,9 |
| 0,478 | 1,7 |
| 0,782 | 1,4 |
| 1,08 | 1,5 |

**Patentansprüche**

1. Verwendung von Thiadiazol-Verbindungen der Formel

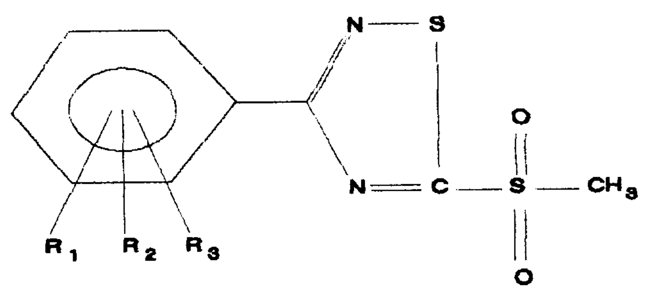

Formel I

mit

$R_1$, $R_2$, $R_3$ =
- Wasserstoff
- Alkylgruppen mit 1 - 4 Kohlenstoffatomen
- substituierte Alkylgruppen mit 1 - 4 Kohlenstoffatomen, die mit Halogen, einer Alkoxy-, Carboxy-, Hydroxy- oder oder Nitrogruppe substituiert sind
- CN, Halogen, $NO_2$
- COOR mit R = H, Alkylgruppen mit 1 - 4 Kohlenstoffatomen

als Wirkstoff in Desinfektionsmitteln, Holzschutzmitteln, Konservierungmitteln und zur bakteriziden und fungiziden Ausrüstung von Farben, Textilien, Kunststoffen und Baustoffen.

2. Holzschutzmittel, dadurch gekennzeichnet, daß sie neben flüssigen oder festen Trägerstoffen Thiadiazol-Verbindungen gemäß Anspruch 1 als Wirkstoff enthalten.

3. Holzschutzmittel nach Anspruch 2, dadurch gekennzeichnet, daß der Wirkstoff 5-Methylsulfonyl-3-phenyl-1,2,4-thiadiazol ist.

4. Verwendung von Thiadiazol-Verbindungen gemäß Anspruch 1, dadurch gekennzeichnet, daß diese mit Co-Bioziden im Gewichtsverhältnis 1 : 10 bis 10 : 1 kombiniert sind.

5. Holzschutzmittel, dadurch gekennzeichnet, daß sie neben flüssigen oder festen Trägerstoffen Thiadiazol-Verbindungen gemäß Anspruch 1 in Kombination mit Co-Bioziden als Wirkstoffe enthalten.

6. Holzschutzmittel gemäß Anspruch 5, dadurch gekennzeichnet, daß sie die Thiadiazol-Verbindungen in synergistischer Kombination mit Tributylzinn-Verbindungen, quartären Ammonium-Verbindungen oder Triazolen enthalten.

Europäisches Patentamt

# EUROPÄISCHER RECHERCHENBERICHT

Nummer der Anmeldung
EP 93 11 1628

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | EP-A-0 534 219 (BAYER AG) 31. März 1993<br>* Seite 2, Zeile 1 - Zeile 21 *<br>* Seite 3, Zeile 51 - Zeile 57 *<br>* Seite 4, Zeile 46 - Seite 5, Zeile 10 *<br>* Seite 5, Zeile 20 - Zeile 22 *<br>* Ansprüche 1,7 *<br>--- | 2,3,5 | A01N43/82<br>C09D5/14<br>B27K3/34<br>B27K3/50<br>C08K5/46<br>D06M13/352<br>//(A01N43/82, 55:04,43:82, 33:12) |
| X | DE-A-22 42 187 (CIBA-GEIGY AG)<br>* Seite 1 *<br>* Seite 6, Tabelle, Absatz 1 *<br>* Seite 8 - Seite 16, Absatz 1 *<br>* Seite 16, Absatz 4 *<br>* Seite 18, Absatz 2 *<br>* Seite 19 - Seite 20, Absatz 3 *<br>* Ansprüche 1-4,10-14 *<br>--- | 1-5 | |
| D,X | DE-A-21 42 913 (FISONS LTD)<br>* Seite 1 - Seite 2, Absatz 2 *<br>* Seite 4, Absatz 1 -Absatz 3 *<br>* Seite 5 *<br>* Seite 6, letzter Absatz *<br>* Ansprüche 1,6-9 *<br>--- | 2,3,5 | **RECHERCHIERTE SACHGEBIETE (Int.Cl.5)** |
| A | DE-A-40 36 507 (CHEMIE AG BITTERFELD-WOLFEN) 4. Juli 1991<br>* Seite 1, Zeile 1 - Zeile 52 *<br>--- | 1-6 | A01N<br>C09D<br>B27K<br>C08K<br>D06M |
| A | CHEMICAL ABSTRACTS, vol. 59, no. 10, 11. November 1963, Columbus, Ohio, US; abstract no. 11540e,<br>* Zusammenfassung *<br>& JP-A-37 017 997 (JAPAN SODA) 13. November 1962<br>& JP-A-37 017 998 (JAPAN SODA)<br>----- | 1-6 | |

Der vorliegende Recherchenbericht wurde für alle Patentansprüche erstellt

| Recherchenort | Abschlußdatum der Recherche | Prüfer |
|---|---|---|
| DEN HAAG | 22. Dezember 1993 | Muellners, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)